# EUROPEAN PATENT SPECIFICATION

(11) **EP 2 693 688 B1**
(45) Date of publication and mention of the grant of the patent: **08.04.2015**
(21) Application number: 13003507.4
(22) Date of filing: 11.07.2013
(51) Int. Cl.: H04L 12/10, H04L 12/40, G06F 1/26

(54) **Cable imbalance diagnostics between channels that include wire pairs for power over ethernet transmission**
Kabelungleichsgewichtsdiagnostik zwischen Kanälen mit Doppelleitungspaaren für Leistung über Ethernetübertragung
Diagnostics de déséquilibre de câble entre canaux qui comprennent des paires de câbles pour transmission de puissance sur Ethernet

(30) Priority: 03.08.2012 US 201261679175 P; 09.05.2013 US 201313890596
(43) Date of publication of application: 05.02.2014
(73) Proprietor: Broadcom Corporation, Irvine, CA 92617 (US)
(72) Inventor: Wael, Diab, San Francisco, CA 94109 (US)
(74) Representative: Jehle, Volker Armin

(56) References cited:
- WO-A1-2006/052360
- WO-A2-2007/121150

## Description

This application claims priority to provisional application no. 61/679,175, filed August 3, 2012.

### BACKGROUND

### Field of the Invention

The present invention relates generally to network powering systems and methods and, more particularly, to cable imbalance diagnostics between channels that include wire pairs for power over Ethernet transmission.

### Introduction

Power over Ethernet (PoE) provides a framework for delivery of power from power sourcing equipment (PSE) to a powered device (PD) over Ethernet cabling. Various types of PDs exist, including voice over IP (VoIP) phones, wireless LAN access points, Bluetooth access points, network cameras, computing devices, etc.

In a PoE application such as that described in the IEEE 802.3af and 802.3at (which are now part of the IEEE 802.3 revision and its amendments), a PSE can deliver up to 25.5W of power to a PD over two of the four wire pairs in an Ethernet cable.

WO 2006/052360 A1 relates to a circuit delivering common mode inline power over a pair of conductors in which imbalance in the current carried by the first and second conductors of the pair of conductors is detected and compensated with a bias current applied to counter the imbalance.

WO 2007/121150 A2 describes methods and apparatus for balancing power across all conductors of an Ethernet connection. Balancing circuitry is disclosed to allow an Ethernet midspan device to receive power from an Ethernet Power Sourcing Equipment (PSE) on the signal pairs of an Ethernet connection. The balancing circuitry is configured to sense the level of the received power, and generate a second power source substantially equal to the received power level. The received power is provided to an Ethernet Powered Device (PD) over the signal pairs of an Ethernet connection, and the generated power to the PD over the unused pairs of the Ethernet connection.

According to the invention, there are provided a method and a power sourcing equipment as defined by independent claim 1 and independent claim 7, respectively.

Further advantageous features of the present invention are defined by the dependent claims.

According to an aspect, a method comprises:
measuring one or more characteristics of a first channel that includes a first of four twisted wire pairs in a network cable, and one or more characteristics of a second channel that includes a second of the four twisted wire pairs, wherein the four twisted wire pairs are used to deliver power from a power sourcing equipment to a powered device;
determining, by the power sourcing equipment, whether the measured one or more characteristics of the first channel and the measured one or more characteristics of the second channel indicate an imbalance between the first channel and the second channel; and
adjusting an operation of the power sourcing equipment in delivering power to the powered device in response to the determination.

Advantageously, the measuring comprises measuring an impedance of the first channel and the second channel.

Advantageously, the determining comprises determining a difference in impedance between the first channel and the second channel.

Advantageously, the imbalance is an inductive or capacitive imbalance.

Advantageously, the method further comprises generating a message that reports the determined imbalance.

Advantageously, the adjusting comprises compensating for the imbalance.

Advantageously, the adjusting comprises limiting an operation of the power sourcing equipment to a delivery of power to the powered device over two wire pairs.

Advantageously, the measuring comprises measuring one or more characteristics of magnetics in the first channel.

Advantageously, the measuring comprises measuring one or more characteristics of a connector in the first channel.

Advantageously, the measuring comprises measuring one or more characteristics of a patch cable that is different than the network cable.

Advantageously, the measuring comprises measuring using a physical layer device.

Advantageously, the measuring comprises measuring using a power sourcing equipment.

Advantageously, the measuring comprises determining a category type of Ethernet cabling of the network cable.

According to an aspect, a power sourcing equipment comprises:
a port for delivering power to a powered device via four twisted wire pairs in a network cable; and
a controller that is configured to receive diagnostic information based on measurements of one or more characteristics of a first channel that includes a first of the four twisted wire pairs in a network cable, and one or more characteristics of a second channel that includes a second of the four twisted wire pairs, determine whether the received diagnostic information indicates an imbalance between the first channel and the second channel, and adjust an operation of the power sourcing equipment in delivering power to the powered device in response to the determination.

Advantageously, the measurements are impedance measurements.

Advantageously, the controller is configured to generate a message that reports the determined imbalance.

Advantageously, the controller is configured to compensate for the imbalance.

Advantageously, the controller is configured to limit an operation of the power sourcing equipment to a delivery of power to the powered device over two wire pairs.

### BRIEF DESCRIPTION OF THE DRAWINGS

In order to describe the manner in which the above-recited and other advantages and features of the invention can be obtained, a more particular description of the invention briefly described above will be rendered by reference to specific embodiments thereof which are illustrated in the appended drawings. Understanding that these drawings depict only typical embodiments of the invention and are not therefore to be considered limiting of its scope, the invention will be described and explained with additional specificity and detail through the use of the accompanying drawings in which:
FIG. 1 illustrates an example of a link between a power sourcing equipment and a powered device.
FIG. 2 illustrates a first example of a delivery of power from a power sourcing equipment to a powered device via four wire pairs.
FIG. 3 illustrates an example circuit of a delivery of power from a power sourcing equipment to a powered device via four wire pairs.
FIG. 4 illustrates a second example of a delivery of power from a power sourcing equipment to a powered device via four wire pairs.
FIG. 5 illustrates a flowchart of an example process according to the present invention.
FIG. 6 illustrates an example of an embodiment of a PHY that is configured to perform diagnostics according to the present invention.

### DETAILED DESCRIPTION

Various embodiments of the invention are discussed in detail below. While specific implementations are discussed, it should be understood that this is done for illustration purposes only. A person skilled in the relevant art will recognize that other components and configurations may be used without parting from the spirit and scope of the invention.

Power over Ethernet (PoE) can be used to deliver power from a power sourcing equipment (PSE) to a powered device (PD) via a twisted pair Ethernet cable. In four-pair PoE systems, an imbalance can occur between two different wire pairs. One issue created by such an imbalance is an increase in the effective resistance of a path used to deliver power via the parallel set of wire pairs. This increase in the effective resistance of the path used to deliver power can lead to inefficiencies in the delivery of power as a greater portion of the power budget is now attributed to losses in the cabling itself. In the present invention, it is recognized that mismatches can be created based on characteristics of the cable itself, the connectorization (e.g., patch cords, patch panels, connectors, etc. for structured wiring), magnetics, printed circuit board (PCB) traces, or any other element that is part of the channel used to deliver power via the network.

In one embodiment, measurements of one or more characteristics of a first channel that includes a first of four twisted wire pairs in a network cable are performed along with measurements of one or more characteristics of a second channel that includes a second of the four twisted wire pairs in the network cable. A determination can then be made as to whether the measured one or more characteristics of the first channel and the measured one or more characteristics of the second channel indicate an imbalance between the first channel and the second channel. Adjustments such as isolation, reporting or compensation can then be made in response to the determination. As noted, the particular characteristic of the channel that is measured can include one or more of the characteristics of the network cable, connectors, patch cords, magnetics, PCB traces, etc.

The principles of the present invention are not limited to imbalances between pairs. In other embodiments, the imbalances can be measured within a single wire pair. In general, the principles of the present invention are directed to any imbalance that can be created within a channel used to delivery power to a PD.

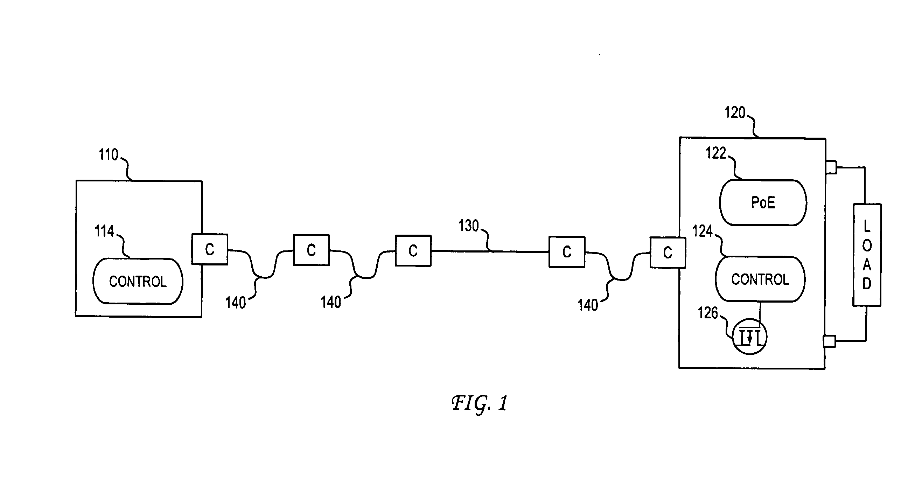

FIG. 1 illustrates an example of a link used to provide power to a PD via a network. In this illustrated example, the principles of the present invention provide a process that can be incorporated in one or more of PSE 110 and PD 120 to identify and respond to channel imbalances. In one embodiment, PSE 110 is a midspan PSE.

Channel imbalances can arise in various contexts where the theoretical framework of network powering is applied to real network applications where less than ideal components and installations are encountered. Notwithstanding these network imperfections, the efficient delivery of network power can still be achieved through proper diagnostics and corrective measures. Without the implementation of proper diagnostics and corrective measures, network performance will unnecessarily suffer, thereby elevating the total costs of administering the network.

As illustrated in FIG. 1, PSE 110 can be connected to PD 120 via a link that includes multiple link segments. These multiple link segments include one or more patch cables 140 along with network cable 130. In general, additional link segments would dictate that additional connectors and/or magnetics would be used.

In various embodiments, patch cables 140 can be used in facilitating an organized delivery of power and communications via cross-connect systems, wall outlets, or the like. Patch cables 140 and network cable 130 are also coupled to various connectors along the length of the link. While the addition of multiple patch cables and connectors serves to provide for structured deployment of network services, the increase in the number of elements in the channel serves to create additional opportunities for channel imbalances to occur. In the present invention, it is recognized that the increased complexity of structured cabling systems should be met with increased diagnostics to root out the increased instances of network imperfections.

In the PoE installation of FIG. 1, PD 120 can include PoE module 122 that contains the electronics that would enable PD 120 to communicate with PSE 110 in accordance with a PoE specification such as IEEE 802.3af, 802.3at, legacy PoE transmission, or any other type of PoE transmission. PD 120 also includes controller 124 (e.g., pulse width modulation DC:DC controller) that controls power transistor 126, which in turn provides constant power to a load. PSE 110, on the other hand, includes one or more power supplies (not shown) and controller 114 that facilitates the detection, classification, powering, disconnection, etc. of PD 120 as well as the diagnostics and corresponding response to channel imbalances.

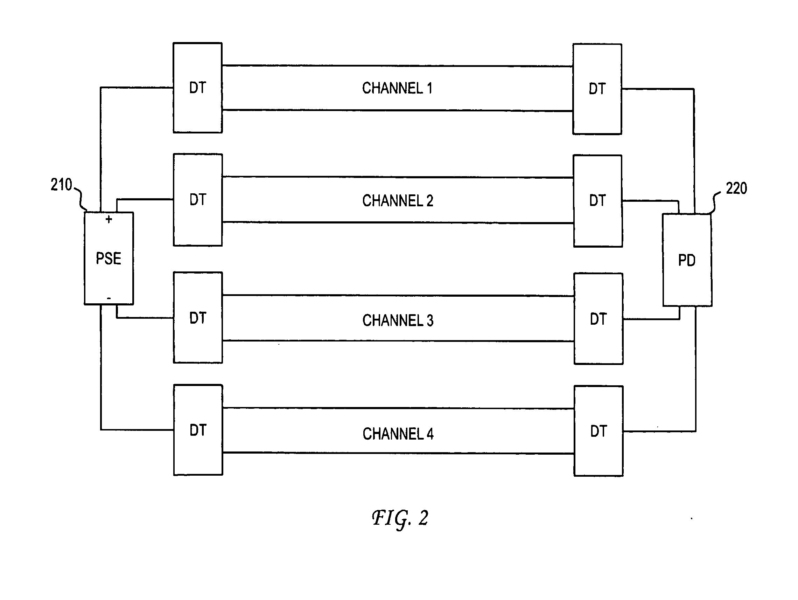

In one example, four-pair PoE power is used to deliver higher power levels (e.g., greater than 15.4W) from the PSE to the PD. In this example, each of the four wire pairs in network cable as well as any patch cables are used to delivery power from the PSE to the PD. FIG. 2 illustrates a first example of a delivery of power from PSE 210 to PD 220 via four wire pairs that are included within four channels. As illustrated, single PSE 210 delivers power to PD 220 via channels 1-4. Power delivered by PSE 210 to PD 220 is provided through the application of a voltage across the center taps of data transformers that are coupled to channels 1 and 2 and data transformers that are coupled to channels 3 and 4. On the other end of the network link, power is received by PD 220 through the center taps of the data transformers. Here, it should be noted that each channel is intended to represent an end-to-end link and would include all of the components (e.g., network cable, patch cables, connectors, magnetics, etc.), between the points of insertion and extraction of power at the PSE and PD, respectively.

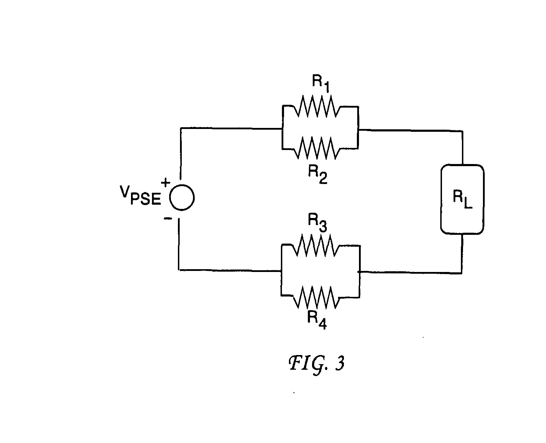

The effective circuit of this scenario of delivering power from PSE 210 to PD 220 is illustrated in FIG. 3, wherein R₁ represents the resistance of the first channel that includes wire pair 1, R₂ represents the resistance of the second channel that includes wire pair 2, R₃ represents the resistance of the third channel that includes wire pair 3, and R₄ represents the resistance of the first channel that includes wire pair 4. More generally, the principles of the present invention can be applied to links having capacitive and inductive imbalances. Here, the equivalent inductance and capacitive imbalances may result from the channel as defined end-to-end or any associated parasitics. In one example, the imbalance can result due to a difference in the windings of the transformers.

In this context, it is again recognized that any imbalance between the channels that include different wire pairs of the network cable can create inefficiencies in the power delivery. This is true especially when considering the delivery of higher power levels in next generation PoE systems. Four-pair PoE systems, in particular, are impacted by the imbalance between the different channels that include the wire pairs as they are designed for delivery of power levels significantly higher than two-pair PoE systems.

In the context of FIG. 3 it can be seen that an imbalance in the resistance of the channels that include the wire pairs can lead to inefficient power delivery. In a simple example, consider a scenario that the resistances of R₁ and R₂ are roughly equivalent to 10Ω (i.e., approximately 100 meters of Category 3 cabling). The effective resistance of R₁ in parallel with R₂ would therefore be (10Ω * 10Ω)/(10Ω + 10Ω) = 5 Ω. If R₁ and R₂ are imbalanced such that R₁ = 15Ω and R₂ = 10Ω, then the effective resistance of R₁ in parallel with R₂ would therefore be (15Ω * 10Ω)/(15Ω + 10Ω) = 6Ω. As this difference can be multiplied by two to represent the complete circuit of FIG. 3, the effective imbalance would be 10Ω versus 12Ω. As would be appreciated, the 20% increase in resistance created by the imbalance can produce significant inefficiency in the delivery of power.

Consider, for example, the delivery of 700 mA of power over the network cable. In this example, the power loss attributed to the additional 2Ω of resistance due to the channel imbalance would be Power Loss (PL) = i²R = (700 mA)² * 2Ω = 0.98W. In and of itself, the additional 0.98W power loss attributable to the channel imbalance may not seem significant. For a 20W PD, the power loss attributable to the channel imbalance represents 5% of the power consumed by the PD. For the cable itself, the additional 20% increase in resistance created by the imbalance produces 5.9W of power loss in the channel as compared to the ideal of 4.9W of power loss by the channel. In the present invention, it is recognized that the effect of channel balance inefficiencies become much more significant when multiplied across a percentage of a large number of PSE ports.

Notwithstanding the inefficiencies created by the additional power loss in the imbalanced channel, the increased resistance over one of the channels can also lead to increased heating over that channel. The amount of heating in the channel will only increase as current levels increase. An unnecessary increase in the heating of the channel can also impact the data communication as the temperature ratings of the cabling are approached or exceeded. Across a bundle of cables in an enterprise installation, such a temperature impact will also be cumulative across the set of cables. More specifically, the increased heating in a bundle of cables can translate to a reduction in the overall subset of ports that can be powered and/or a reduction of the maximum operating current of all ports (i.e., reduced functionality) to keep the heat down. The impact of channel imbalances cannot be understated.

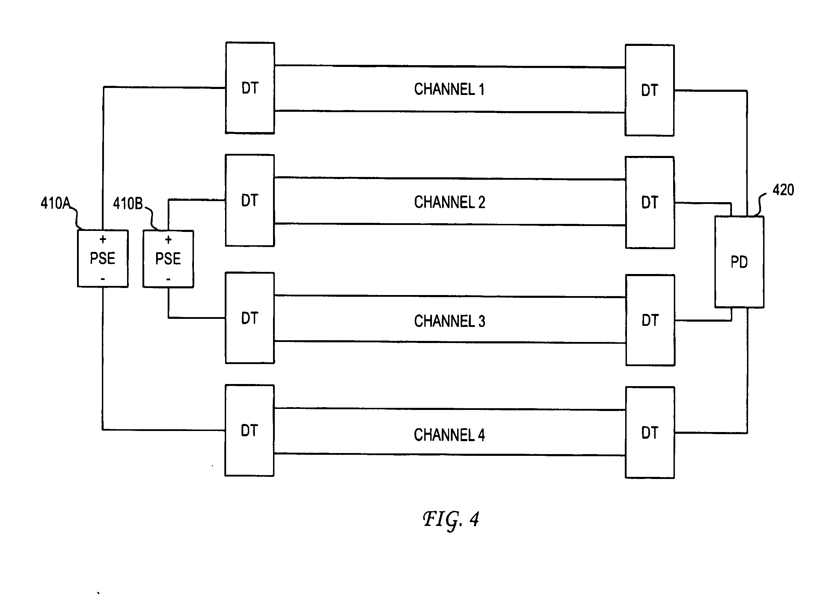

FIG. 4 illustrates another example of a delivery of power from a PSE to a PD via four wire pairs. As illustrated, two PSEs 410A, 410B deliver power to PD 420 via four channels that include wire pairs 1-4. In one example, two PSEs power a single PD where current sharing is occurring at the PD. In another example, the two PSEs can represent an implementation of one logical PSE that is powering one PD, where current sharing is occurring at the PD and/or at the PSEs. In yet another example, there could exist "bonded ports" where two PSEs power two PDs, where the two PDs are included in a single device. In one scenario, the two PSEs can be on one logical PHY port or part of two ports (e.g., two pairs on each of a 1000BASE-T channel).

In general, the impact of these and other variations is that by having an imbalance, more power can be pushed through one leg of a channel as compared to the other. In addition to a current limit, other effects include a less efficient transmission of power, additional generation of heat, a need for more complex current sharing circuitry at the PD and/or the PSE adding additional complexity, an impact of the voltage at the PD as the voltage drop is impacted by the effective resistance in the channel, additional generation of heat within the components (e.g., magnetics, FETs and/or powering circuits), etc. The impact of these various effects is the accelerated degradation of the equipment and channel over time.

Power delivered by PSE 410A to PD 220 is provided through the application of a voltage across the center taps of data transformers that are coupled to channels 1 and 4, while power delivered by PSE 410B to PD 220 is provided through the application of a voltage across the center taps of data transformers that are coupled to channels 3 and 4. Again, it should be noted that each channel is intended to represent an end-to-end link and would include all of the components (e.g., network cable, patch cables, connectors, magnetics, etc.), between the points of insertion and extraction of power at the PSE and PD, respectively. In this example, the system resistance mismatch of just a few ohms between the two PSEs can impact the current supplied by the two PSEs. Here, the offset in current by the two PSEs could place one of the PSEs into a current limit, which could produce a shut down on that port.

In general, imbalances created between PSEs when considering the cumulative effect of powering a plurality of PDs will impact the efficiency of operating the different power supplies. Ideally, each power supply is operating at near peak capacity to enable the power supply to operate efficiently. Where significant variance exists in the amount of power delivered by individual power supplies based on flawed provisioning assumptions, the efficiency of power delivery by the set of power supplies will corresponding drop leading to increased administrative costs.

As has been described, imbalances created by mismatches in the channels that include wire pairs of a network cable, wire pairs of patch cables, connectors, magnetics, PCB traces, etc. can impact performance by the PoE system in various ways. It is therefore a feature of the present invention that cable imbalance diagnostics between channels for power over Ethernet transmission can be provided to identify and potentially correct such imbalances.

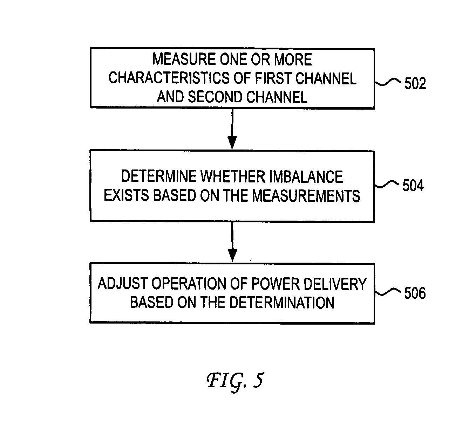

To illustrate various features of the present invention, reference is made to the flowchart of FIG. 5, which illustrates a process of the present invention. As illustrated, the process begins at step 502, where measurements are made of one or more characteristics of a first channel that includes a first wire pair and a second channel that includes a second wire pair. In one embodiment, the measurements (e.g., time domain reflectometry, insertion loss, cross talk, etc.) can be made by a diagnostic module in a physical layer device (PHY). In general, the measurements can be mapped to one or more characteristics of the channel.

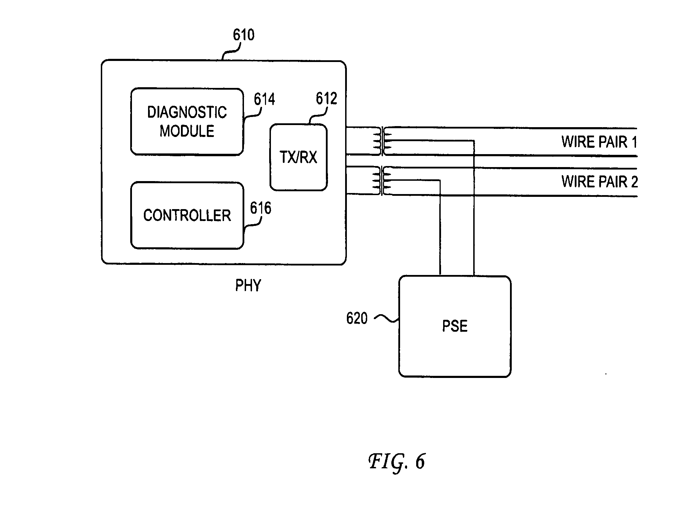

FIG. 6 illustrates an example of an embodiment of a PHY that is configured to perform diagnostics according to the present invention. As illustrated, transceiver 612 in PHY 610 is coupled to wire pair 1 and wire pair 2 via a set of data transformers. PSE 620 is illustrated as being coupled to the center taps of the set of data transformers to deliver power to a PD via wire pair 1 and wire pair 2. Such a configuration would be similar to that illustrated in the four-pair powering scenario of FIG. 2. As would be appreciated, PHY 610 would be coupled to four wire pairs in communicating with a PHY in a link partner in accordance with a communication standard such as 10GBASE-T, 100BASE-TX, 1000BASE-T, 10GBASE-T, 40GBASE-T, and any future speeds such as 100G, 400G, etc. For simplicity, PHY 610 is illustrated as being coupled to only wire pair 1 and wire pair 2. In operation, diagnostic module 614 under control of controller 616 can be configured to perform relative diagnostics between channels that include wire pair 1 and wire pair 2, respectively. In general, the measurements can be single-ended measurements or dual-ended measurements. The existence of more measurement points, yields more accurate results. Some baseline measurements can also be shared between ports.

In one embodiment, diagnostic module 614 can be designed to measure one or more characteristics that enable a determination of an impedance of the first channel. For example, diagnostic module 614 can be designed to measure one or more characteristics that are indicative of the type of cabling, length of cabling, temperature, number of connectors, etc. in the different channels.

In another embodiment, measurements of one or more characteristics can be made by the PoE system (i.e., PSE and/or PD). For example, the PoE system can conduct current-voltage (I-V) measurements at various points of the PoE process (e.g., pre-detection, post-detection, pre-powering, post-powering, etc.) to develop a profile of the different channels. In another example, the PSE and the PD can cooperate in this process in communicating measurement data across the link via a protocol such as the Link Layer Discovery Protocol (LLDP).

Based on the measurements of these one or more characteristics, the PoE system can then determine whether an imbalance exists between different channels at step 504. In one embodiment, the one or more measurements are used to calculate or otherwise determine an impedance of the different channels. A comparison of the impedances of the different channels can therefore provide an indication of the level of mismatch or imbalance. In one embodiment, the one or more measurements can be used in reference to tabular data to infer the existence of a mismatch or an imbalance. For example, the direct measurements or the difference between the measurements can be compared to tabular reference data to determine whether a threshold difference has been exceeded. In another embodiment, the one or more measurements can be applied to algorithmic reference data to infer the existence of a mismatch. For example, the direct measurements or the difference between the measurements can be processed by defined imbalance formulas to determine whether a threshold difference has been exceeded. As would be appreciated, the particular determination mechanism would be dependent on the one or more characteristics that are measured. In one embodiment, a determination of where the imbalance occurs (e.g., computations made on the measurements) can also be made outside of the PoE subsystem. For example, the determination can be made in a processor and/or the PHY and/or a switch system that is coupled to the PHY(s).

Finally, at step 506, the operation of the power delivery of the PoE system can be adjusted based on the determination at step 504. Various types of adjustments can be made in response to the determination at step 504. In one example, a message can be generated that alerts IT personnel of the imbalance. As the alert can be generated as part of an automated process, the alert messaging is part of a systematic process of identifying power delivery installations that represent efficiency risks. In response to such an alert, IT personnel can correct the problem by repairing or replacing one or more components in the affected channel(s).

In another example, the imbalance can be addressed through isolation. Here, the identified mismatch can be addressed through limitations being place on the delivery of power. For instance, the PSE can be configured to limit the port to two-pair power, limit the output power on a port having an imbalance, etc. In yet another example, the imbalance can be addressed through compensation. Here, hardware and/or software compensation mechanisms can be used to counteract the imbalance. For example, compensation mechanisms can be used to balance the current between mismatched channels. This balancing mechanism can ensure that unintended excess heating effects are not created in particular wire pairs. In other examples, current sharing circuitry may be activated, a voltage may be adjusted at the PD and/or PSE, a voltage may be adjusted on one set of pairs vs. another (e.g. one pair can have its voltage increased relative to the other so that the resulting voltage drop across is the same if the PD has isolated taps where they are not tied at the RX but further down), a PD power draw can be adjusted, a PSE current limit or limits (if separate on each leg) can be adjusted, etc.

As has been described, the incorporation of a systematic mechanism for identifying and addressing channel imbalances serves to increase the efficiency of an enterprise network in providing power to a plurality of PDs in an efficient manner. Channel imbalances can create unintended consequences such as excess heating that would not be accounted for with standard provisioning models. While the above description has been focused on the distribution of power through Ethernet twisted pair cabling, the principles of the present invention can also be applied to digital subscriber line (DSL) technology, power over data line (PoDL) technology, automotive power over Ethernet, etc.

Another embodiment of the invention may provide a machine and/or computer readable storage and/or medium, having stored thereon, a machine code and/or a computer program having at least one code section executable by a machine and/or a computer, thereby causing the machine and/or computer to perform the steps as described herein.

[***0041***] These and other aspects of the present invention will become apparent to those skilled in the art by a review of the preceding detailed description. Although a number of salient features of the present invention have been described above, the invention is capable of other embodiments and of being practiced and carried out in various ways that would be apparent to one of ordinary skill in the art after reading the disclosed invention, therefore the above description should not be considered to be exclusive of these other embodiments. Also, it is to be understood that the phraseology and terminology employed herein are for the purposes of description and should not be regarded as limiting.

## Claims

1. A method, comprising:
measuring one or more characteristics of a first channel that includes a first of four twisted wire pairs in a network cable (130), and one or more characteristics of a second channel that includes a second of the four twisted wire pairs, wherein the four twisted wire pairs are used to deliver power from a power sourcing equipment (110) to a powered device (120),
wherein the measuring comprises measuring an impedance of the first channel and the second channel;
determining, by the power sourcing equipment (110), whether the measured one or more characteristics of the first channel and the measured one or more characteristics of the second channel indicate an imbalance between the first channel and the second channel,
wherein the imbalance comprises an inductive or capacitive imbalance; wherein the determining comprises determining a difference in impedance between the first channel and the second channel; and
adjusting an operation of the power sourcing equipment in delivering power to the powered device (120) in response to the determination,
wherein the adjusting comprises compensating for the imbalance.

2. The method of claim 1, further comprising generating a message that reports the determined imbalance.

3. The method of any preceding claim, wherein the adjusting comprises limiting an operation of the power sourcing equipment (110) to a delivery of power to the powered device (120) over two wire pairs.

4. The method of any preceding claim, wherein the measuring comprises measuring one or more characteristics of magnetics in the first channel.

5. The method of any preceding claim, wherein the measuring comprises measuring one or more characteristics of a connector in the first channel.

6. The method of any preceding claim, wherein the measuring comprises measuring one or more characteristics of a patch cable (140) that is different than the network cable (130).

7. A power sourcing equipment (110), comprising:
a port for delivering power to a powered device (120) via four twisted wire pairs in a network cable (130); and
a controller that is configured to (114)
receive diagnostic information based on measurements of one or more characteristics of a first channel that includes a first of the four twisted wire pairs in a network cable, and one or more characteristics of a second channel that includes a second of the four twisted wire pairs,
wherein the measurements are impedance measurements;
determine whether the received diagnostic information indicates an imbalance between the first channel and the second channel,
wherein the imbalance comprises an inductive or capacitive imbalance;
adjust an operation of the power sourcing equipment (110) in delivering power to the powered device (120) in response to the determination, and
compensate for the imbalance.

8. The power sourcing equipment (110) of claim 7, wherein the controller (114) is configured to generate a message that reports the determined imbalance.

9. The power sourcing equipment (110) of claims 7 or 8, wherein the controller (114) is configured to limit an operation of the power sourcing equipment (110) to a delivery of power to the powered device (120) over two wire pairs.

## Patentansprüche

1. Verfahren, das umfasst:
Messen einer oder mehrerer Eigenschaften eines ersten Kanals, der ein erstes von vier verdrillten Leiterpaaren in einem Netzkabel (130) aufweist, und einer oder mehrerer Eigenschaften eines zweiten Kanals, der ein zweites der vier verdrillten Leiterpaare aufweist, wobei die vier verdrillten Leiterpaare verwendet werden, um Strom von einer Stromquelleneinrichtung (110) an eine angetriebene Vorrichtung (120) zu liefern;
wobei das Messen das Messen einer Impedanz des ersten Kanals und des zweiten Kanals umfasst; Ermitteln, durch die Stromquelleneinrichtung (110), ob die gemessene eine oder mehreren Eigenschaften des ersten Kanals und die gemessene eine oder mehreren Eigenschaften des zweiten Kanals ein Ungleichgewicht zwischen dem ersten Kanal und dem zweiten Kanal anzeigen,
wobei das Ungleichgewicht ein induktives oder kapazitives Ungleichgewicht aufweist;
wobei das Ermitteln das Ermitteln einer Differenz der Impedanz zwischen dem ersten Kanal und dem zweiten Kanal umfasst; und Einstellen des Betriebs der Stromquelleneinrichtung zum Liefern von Strom an die angetriebene Vorrichtung (120) im Ansprechen auf das Ermitteln,
wobei das Einstellen das Ausgleichen des Ungleichgewichts umfasst.

2. Verfahren nach Anspruch 1, das des Weiteren das Erzeugen einer Nachricht umfasst, die das ermittelte Ungleichgewicht meldet.

3. Verfahren nach einem der vorhergehenden Ansprüche, wobei das Einstellen das Begrenzen des Betriebs der Stromquelleneinrichtung (110) auf das Liefern von Strom an die angetriebene Vorrichtung (120) über zwei Leiterpaare umfasst.

4. Verfahren nach einem der vorhergehenden Ansprüche, wobei das Messen das Messen einer oder mehrerer Eigenschaften von Magnetik in dem ersten Kanal umfasst.

5. Verfahren nach einem der vorhergehenden Ansprüche, wobei das Messen das Messen einer oder mehrerer Eigenschaften eines Anschlusses in dem ersten Kanal umfasst.

6. Verfahren nach einem der vorhergehenden Ansprüche, wobei das Messen das Messen einer oder mehrerer Eigenschaften eines Patchkabels (140) umfasst, das sich von dem Netzkabel (130) unterscheidet.

7. Stromquelleneinrichtung (110) mit:
einem Port zum Liefern von Strom an eine angetriebene Vorrichtung (120) über vier verdrillte Leiterpaare in einem Netzkabel (130); und
einem Controller, der dazu konfiguriert (114) ist,
Diagnoseinformationen basierend auf Messungen einer oder mehrerer Eigenschaften eines ersten Kanals zu empfangen, der ein erstes der vier verdrillten Leiterpaaren in einem Netzkabel aufweist, und einer oder mehrerer Eigenschaften eines zweiten Kanals, der ein zweites der vier verdrillten Leiterpaare aufweist,
wobei die Messungen Impedanzmessungen sind;
zu ermitteln, ob die empfangenen Diagnoseinformationen ein Ungleichgewicht zwischen dem ersten Kanal und dem zweiten Kanal anzeigen,
wobei das Ungleichgewicht ein induktives oder kapazitives Ungleichgewicht aufweist;
den Betrieb der Stromquelleneinrichtung (110) zum Liefern von Strom an die angetriebene Vorrichtung (120) im Ansprechen auf das Ermitteln einzustellen, und
das Ungleichgewicht auszugleichen.

8. Stromquelleneinrichtung (110) nach Anspruch 7, wobei der Controller (114) dazu konfiguriert ist, eine Nachricht zu erzeugen, die das ermittelte Ungleichgewicht meldet.

9. Stromquelleneinrichtung (110) nach Anspruch 7 oder 8, wobei der Controller (114) dazu konfiguriert ist, den Betrieb der Stromquelleneinrichtung (110) auf das Liefern von Strom an die angetriebene Vorrichtung (120) über zwei Leiterpaare zu begrenzen.

## Revendications

1. Procédé, comprenant :
la mesure d'une ou plusieurs caractéristiques d'un premier canal qui inclut une première parmi quatre paires de fils torsadées dans un câble (130) réseau, et d'une ou plusieurs caractéristiques d'un deuxième canal qui inclut une deuxième des quatre paires de fils torsadées, dans lequel les quatre paires de fils torsadées sont utilisées pour amener une alimentation d'un équipement (110) de source d'alimentation jusqu'à un dispositif (120) alimenté,
dans lequel la mesure comprend la mesure d'une impédance du premier canal et du deuxième canal ;
la détermination, par l'équipement (110) de source d'alimentation, si la ou les plusieurs caractéristiques mesurées du premier canal et la ou les plusieurs caractéristiques mesurées du deuxième canal indiquent un déséquilibre entre le premier canal et le deuxième canal,
dans lequel le déséquilibre comprend un déséquilibre inductif ou capacitif ;
dans lequel la détermination comprend la détermination d'une différence d'impédance entre le premier canal et le deuxième canal ; et
l'ajustement d'un fonctionnement de l'équipement de source d'alimentation pour amener une alimentation au dispositif (120) alimenté en réponse à la détermination,
dans lequel l'ajustement comprend la compensation du déséquilibre.

2. Procédé selon la revendication 1, comprenant en outre la génération d'un message qui rapporte le déséquilibre déterminé.

3. Procédé selon une quelconque revendication précédente, dans lequel l'ajustement comprend la limitation d'un fonctionnement de l'équipement (110) de source d'alimentation à une délivrance d'alimentation au dispositif (120) alimenté sur deux paires de fils.

4. Procédé selon une quelconque revendication précédente, dans lequel la mesure comprend la mesure d'une ou plusieurs caractéristiques de magnétisme dans le premier canal.

5. Procédé selon une quelconque revendication précédente, dans lequel la mesure comprend la mesure d'une ou plusieurs caractéristiques d'un connecteur dans le premier canal.

6. Procédé selon une quelconque revendication précédente, dans lequel la mesure comprend la mesure d'une ou plusieurs caractéristiques d'un cordon (140) de raccordement qui est différent du câble (130) réseau.

7. Équipement (110) de source d'alimentation, comprenant :
un port pour amener une alimentation à un dispositif (120) alimenté par l'intermédiaire de quatre paires de fils torsadées dans un câble (130) réseau ; et
un contrôleur qui est configuré pour (114)
recevoir des informations de diagnostic sur la base de mesures d'une ou plusieurs caractéristiques d'un premier canal qui inclut une première parmi les quatre paires de fils torsadées dans un câble réseau, et d'une ou plusieurs caractéristiques d'un deuxième canal qui inclut une deuxième des quatre paires de fils torsadées,
dans lequel les mesures sont des mesures d'impédance ;
déterminer si les informations de diagnostic reçues indiquent un déséquilibre entre le premier canal et le deuxième canal,
dans lequel le déséquilibre comprend un déséquilibre inductif ou capacitif ;
ajuster un fonctionnement de l'équipement (110) de source d'alimentation pour amener une alimentation au dispositif (120) alimenté en réponse à la détermination, et
compenser le déséquilibre.

8. Équipement (110) de source d'alimentation selon la revendication 7, dans lequel le contrôleur (114) est configuré pour générer un message qui rapporte le déséquilibre déterminé.

9. Équipement (110) de source d'alimentation selon la revendication 7 ou 8, dans lequel le contrôleur (114) est configuré pour limiter un fonctionnement de l'équipement (110) de source d'alimentation à une délivrance d'alimentation au dispositif (120) alimenté sur deux paires de fils.
